# EUROPÄISCHE PATENTSCHRIFT

(11) **EP 3 464 010 B1**
(45) Veröffentlichungstag und Bekanntmachung des Hinweises auf die Patenterteilung: **26.05.2021**
(21) Anmeldenummer: 17729814.8
(22) Anmeldetag: 29.05.2017
(51) Int. Cl.: B61C 13/04, B61B 5/00, B61B 13/04

(54) **SCHIENENTRANSPORTSYSTEM UND SCHIENENFAHRZEUG FÜR EIN SCHIENENTRANSPORTSYSTEM**
RAIL TRANSPORT SYSTEM AND RAIL VEHICLE FOR A RAIL TRANSPORT SYSTEM
SYSTÈME DE TRANSPORT À RAILS ET VÉHICULE FERROVIAIRE POUR UN SYSTÈME DE TRANSPORT À RAILS

(30) Priorität: 07.06.2016 DE 102016210030
(43) Veröffentlichungstag der Anmeldung: 10.04.2019
(73) Patentinhaber: Montratec GmbH, 78078 Niedereschach (DE)
(72) Erfinder: WORM, Sven, 72280 Dornstetten (DE)
(74) Vertreter: Patentanwälte Ruff, Wilhelm, Beier, Dauster & Partner mbB
(86) Internationale Anmeldenummer: PCT/EP2017/062880
(87) Internationale Veröffentlichungsnummer: WO 2017/211607

(56) Entgegenhaltungen:
- EP-A1- 0 728 647
- EP-A2- 0 088 452
- DE-A1- 3 016 454
- DE-A1-102008 005 385
- DE-U1- 9 003 155

## Beschreibung

Die vorliegende Erfindung betrifft ein Schienentransportsystem für Produktions-, Montage-und/oder Logistikprozesse umfassend eine Laufschiene und ein entlang der Laufschiene bewegbares Schienenfahrzeug, wobei die Laufschiene beidseits einer Mittellinie jeweils eine Laufbahn und mindestens eine Führungsbahn aufweist. Die Erfindung betrifft weiter ein Schienenfahrzeug für ein Schienentransportsystem.

Ein Schienentransportsystem ist beispielsweise aus EP 0 088 452 A2 und/oder EP 0 728 647 A1 bekannt, wobei die Laufschiene gemäß EP 0 728 647 A1 zwei schräge, im Querschnitt der Laufschiene A-förmig angeordnete Laufbahnen aufweist. Ein zugehöriges Schienenfahrzeug weist zwei um vertikale Achsen drehbar angeordnete Laufräder auf, mittels welcher das Schienenfahrzeug entlang der Laufbahnen verfahrbar ist.

### AUFGABE UND LÖSUNG

Es ist eine Aufgabe der Erfindung, ein Schienentransportsystem zu schaffen, welches zum Transport hoher Lasten geeignet ist. Es ist eine weitere Aufgabe der Erfindung, ein Schienenfahrzeug für ein derartiges Schienentransportsystem zu schaffen.

Diese Aufgaben werden gelöst durch die Gegenstände mit den Merkmalen der Ansprüche 1 und 7. Vorteilhafte Ausgestaltungen sind in den abhängigen Ansprüchen beschrieben.

Gemäß einem ersten Aspekt wird ein Schienentransportsystem umfassend eine Laufschiene und ein entlang der Laufschiene bewegbares Schienenfahrzeug geschaffen, wobei die Laufschiene beidseits einer Mittellinie jeweils eine horizontale, nach oben weisende Laufbahn aufweist, wobei die Laufbahnen zumindest im Wesentlichen in einer Höhe angeordnet sind, und wobei mindestens an einer ersten Seite der Laufschiene eine obere vertikale Führungsbahn, die oberhalb der Laufbahnen angeordnet ist, und an einer zweiten Seite der Laufschiene eine untere vertikale Führungsbahn, die unterhalb der Laufbahnen angeordnet ist, vorgesehen ist.

Aufgrund der horizontalen, nach oben weisenden Laufbahnen sind hohe Kräfte von dem Schienenfahrzeug an die Laufschiene übertragbar. Die Laufbahnen, oberhalb der zumindest eine Führungsbahn vorgesehen ist, sind jeweils an einem Abschnitt eines Profilelements der Laufschiene vorgesehen, welcher von einer Mittellinie abragt. Der Abschnitt ist dabei vorzugsweise durch den Fachmann geeignet gestaltbar, sodass der Abschnitt eine ausreichende Biegesteifigkeit aufweist. Durch die mindestens zwei beidseits der Mittellinie oberhalb und unterhalb der Laufbahnen angeordneten Führungsbahnen wird die Möglichkeit für ein sicheres Abstützen des Schienenfahrzeugs gegen ein Verkippen geschaffen.

Die Laufschiene umfasst mindestens ein Profilelement, insbesondere mehrere, miteinander in Längsrichtung verbindbare Profilelemente, wobei das mindestens eine Profilelement einen ersten, die Laufbahnen aufweisenden Abschnitt, und einen dazu in vertikaler Richtung beabstandeten zweiten Abschnitt hat, die über einen vertikalen Steg verbunden sind. Für eine Erhöhung der Stabilität bei gleichzeitiger Minimierung des Gewichts nimmt die Breite des Stegs in Richtung des ersten Abschnitts zu, d.h. der Steg weitet sich in Richtung des ersten Abschnitts auf. Die Breite des Stegs nimmt in vorteilhaften Ausgestaltungen kontinuierlich zu.

In vorteilhaften Ausgestaltungen ist an der ersten Seite und der zweiten Seite der Laufschiene, d.h. beidseits der Mittellinie, jeweils eine obere vertikale Führungsbahn, die oberhalb der Laufbahnen angeordnet ist, und eine untere vertikale Führungsbahn, die unterhalb der Laufbahnen angeordnet ist, vorgesehen. Die Führungsbahnen sind vorzugsweise symmetrisch zur Mittellinie angeordnet.

In geeigneten Ausgestaltungen ist die mindestens eine untere Führungsbahn an einer Seitenfläche des ersten Abschnitts und/oder die mindestens eine obere Führungsbahn an einer Seitenfläche des zweiten Abschnitts vorgesehen. Vorzugsweise sind die Führungsbahnen an dem Profilelement symmetrisch bezüglich einer Mittellinie angeordnet.

Die Schienenfahrzeuge des Schienentransportsystems sind vorzugsweise selbsttätig mittels einer an dem Schienenfahrzeug vorgesehenen Antriebsvorrichtung entlang der Laufschiene bewegbar. Die Antriebsvorrichtung umfasst beispielsweise eine Brennstoffzelle wie in WO 2005/118365 A1 beschrieben. In vorteilhaften Ausgestaltungen wird das Schienenfahrzeug oder werden die Schienenfahrzeuge mittels mindestens eines an dem Fahrzeug vorgesehenen Elektroantriebs betrieben. Für eine Energieversorgung des Schienenfahrzeugs ist/sind in vorteilhaften Ausgestaltungen an der ersten Seite und/oder an der zweiten Seite der Laufschiene mindestens eine, vorzugsweise zwei parallel verlaufende Stromführungsschienen vorgesehen. Die mindestens eine Stromführungsschiene ist als Pluspol gestaltet. Vorzugsweist ist weiter ein Nullleiter vorgesehen. Die Stromführungsschienen sind beispielsweise in als T-Nuten gestaltete Ausnehmungen in einem Profilelement der Laufschiene eingesetzt. Es ist denkbar, die Stromführungsschienen an gegenüberliegenden Seiten der Laufschiene vorzusehen. Vorzugsweise sind die Stromführungsschienen beide an einer Seite der Laufschiene vorgesehen. Für eine vorteilhafte Gestaltung der Laufschiene ist die mindestens eine Stromführungsschiene, insbesondere sind beide Stromführungsschienen, an der ersten oder der zweiten Seite der Laufschiene oberhalb der Laufbahnen, vorzugsweise zwischen der oberen Führungsbahn und den Laufbahnen angeordnet. Dadurch ist ein Abstand zwischen der Laufbahn und der Führungsbahn bei gleichbleibender Bauhöhe der Laufschiene maximiert. An den Schienenfahrzeugen sind in vorteilhaften Ausgestaltungen Stromabnehmer vorgesehen, welche mit den Stromführungsschienen zusammenwirken, wie beispielsweise in DE 198 37 975 A1 beschrieben. Insbesondere ist dabei zumindest eine Rolle vorgesehen, vorzugsweise sind zwei Rollen vorgesehen, welche mit zwei parallel verlaufenden Stromführungsschienen, die als Pluspol und als Nullleiter gestaltet sind, zusammenwirken. In einer Ausgestaltung ist jeder Stromführungsschiene jeweils eine Rollengruppe umfassend beispielsweise zwei oder drei Rollen zugeordnet. Die Rollen oder jede Rolle einer Rollengruppe sind senkrecht zu der Stromschiene verschieblich gelagert und werden mittels Federelementen in Richtung der Stromschienen gezwungen.

Die Laufschiene ist in vorteilhaften Ausgestaltungen aus mehreren, miteinander verbundenen Profilelementen zusammengesetzt. Dabei lassen sich durch geeignetes Aneinandersetzen nahezu beliebige Strecken für die Schienenfahrzeuge bilden, wobei die Strecken auf die jeweiligen Anforderungen des Produktions-, Montage- und/oder Logistikprozesses anpassbar sind. Die Profilelemente weisen vorzugsweise jeweils Kammern und/oder Nuten für eine Gewichtsreduzierung auf. Die aus derartigen Profilelementen zusammengesetzte Laufschiene zeichnet sich durch ein geringes Gewicht aus, sodass sowohl eine bodenseitige Anbringung der Laufschiene als auch eine deckenseitige Anbringung oder eine Anbringung auf zueinander beabstandeten Stützen denkbar ist.

Gemäß einem zweiten Aspekt wird ein Schienenfahrzeug für ein beschriebenes Schienentransportsystem, mit der erfindungsgemäßen Laufschiene geschaffen, wobei das Schienenfahrzeug mindestens ein Achsmodul mit zwei beidseits der Laufschiene anzuordnenden Seitenteilen umfasst, wobei jedes Seitenteil ein mit einer Laufbahn der Laufschiene zusammenwirkendes Laufelement aufweist und wobei mindestens ein Seitenteil, vorzugsweise beide Seitenteile, mindestens ein passives Führungselement aufweist, mittels dem der Schienenfahrzeug entlang mindestens einer vertikalen Führungsbahn der Laufschiene führbar ist.

Die Laufelemente sind beispielsweise als ferromagnetische Gleitsteine gestaltet, wobei durch eine bereichsweise Magnetisierung der Laufschiene Anziehungskräfte auf das Schienenfahrzeug aufgebracht werden, welche eine Bewegung des Schienenfahrzeugs bewirken. In vorteilhaften Ausgestaltungen weist jedes Seitenteil als Laufelement ein um eine horizontale Achse drehbar gelagerte Laufrad auf, wobei der Schienenfahrzeug mittels der Laufräder entlang der Laufbahnen verfahrbar ist.

In einer vorteilhaften Ausgestaltung ist eine Antriebsvorrichtung vorgesehen, wobei mindestens ein Laufrad des mindestens Achsmoduls, vorzugsweise jedes Laufrad des Schienenfahrzeugs, mittels der Antriebsvorrichtung für ein selbsttätiges Verfahren des Schienenfahrzeugs entlang der Laufbahnen antreibbar ist. Die Antriebsvorrichtung umfasst in vorteilhaften Ausgestaltungen mindestens einen Elektromotor, wobei die Laufräder des Achsmoduls oder der Achsmodule mittels Getriebe mit dem Elektromotor gekoppelt sind. Ein Getriebesystem umfasst dabei in einer Ausgestaltung ein Differentialgetriebe um ein verschleißarmes Kurvenfahren zu ermöglichen. In anderen Ausgestaltungen umfasst die Antriebsvorrichtung mehrere Antriebseinheiten, wobei jedem Laufrad eine eigene Antriebseinheit, insbesondere ein Elektromotor, zugeordnet, und wobei die Antriebseinheiten miteinander synchronisiert sind. In wieder anderen Ausgestaltungen weist jedes Achsmodul einen Achsantrieb, insbesondere einen Elektromotor, auf, wobei die Achsantriebe der Achsmodule miteinander synchronisiert sind.

Als passives Führungselement ist in einer Ausgestaltung ein Gleitstein oder ein Kugelumlaufschuh vorgesehen. In vorteilhaften Ausgestaltungen ist als das mindestens eine passive Führungselement eine Führungsrädervorrichtung mit mindestens einem um eine vertikale Achse drehbar gelagerten, im Gebrauch entlang der oberen oder der unteren Führungsbahn abrollenden Führungsrad vorgesehen. Vorzugsweise weist jede Führungsrädervorrichtung zwei in Längsrichtung des Achsmoduls versetzt angeordnete, um vertikale Achsen drehbar gelagerte Führungsräder auf. Jedes Achsmodul ist dabei nicht nur gegen eine Rotation um die Längsachse der Laufschiene, sondern auch gegen ein Verkippen Querachsen sicher abgestützt.

In vorteilhaften Ausgestaltungen weist das Schienenfahrzeug zwei in Längsrichtung beabstandete Achsmodule auf, wobei die Achsmodule mittels einer oberhalb oder unterhalb der Laufschiene anordenbaren Trägerplatte verbunden sind. Die Trägerplatte ist je nach Anforderung des Produktions-, Montage- und/oder Logistikprozesses geeignet gestaltbar. Bei Ausgestaltungen des Schienenfahrzeugs mit einem Energiespeicher für elektrische Energie und/oder bei einer Energieversorgung mittels der Stromführungsschienen sind dabei an der Trägerplatte auch Anwendungen realisierbar, welche eine Energieversorgung benötigen, wie Drehstationen, Prüfsysteme und/oder Förderbänder.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine Teilstrecke eines Schienentransportsystems für Produktions-, Montage- und/oder Logistikprozesse in einer perspektivischen Darstellung;
- Fig. 2: die Teilstrecke eines Schienentransportsystems gemäß Fig. 1 in einer Seitenansicht;
- Fig. 3: einen Querschnitt eines Profilelements einer Laufschiene des Schienentransportsystems gemäß Fig. 1;
- Fig. 4: den Querschnitt gemäß Fig. 3 mit schematischer Darstellung von Lauf- und Führungsrädern eines Schienenfahrzeugs;
- Fig. 5: eine Seitenansicht einer Laufschiene gemäß Fig. 3 mit schematischer Darstellung von Lauf- und Führungsrädern eines Schienenfahrzeugs; und
- Fig. 6: eine schematische Darstellung einer Steuereinheit des Schienenfahrzeugs gemäß Fig. 1 und 2.

### DETAILLIERTE BESCHREIBUNG DER AUSFÜHRUNGSBEISPIELE

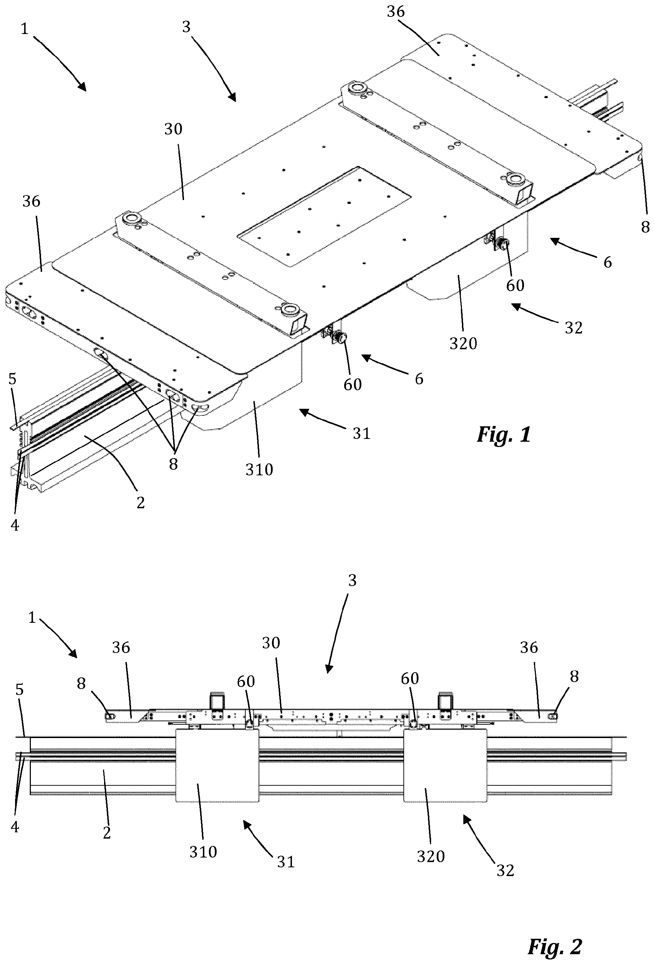

Fig. 1 und 2 zeigen schematisch eine Teilstrecke eines Schienentransportsystems 1 für Produktions-, Montage- und/oder Logistikprozesse in einer perspektivischen Darstellung bzw. einer Seitenansicht. Das Schienentransportsystem 1 umfasst eine Laufschiene 2 und mindestens ein entlang der Laufschiene 2 selbsttätig bewegbares, fahrerloses Schienenfahrzeug 3. Vorzugsweise sind mehrere Schienenfahrzeuge 3 vorgesehen. Das dargestellte Schienentransportsystem 1 wird auch als Monoschienensystem bezeichnet, da die Schienenfahrzeuge 3 entlang nur einer Laufschiene 2 bewegt werden.

Das in den Fig. 1 und 2 dargestellte Schienenfahrzeug 3 umfasst zwei Achsmodule 31, 32 die in Längsrichtung mittels einer Trägerplatte 30 verbunden sind. Die dargestellten Achsmodule 31, 32 haben jeweils zwei beidseits der Laufschiene 2 anzuordnende Seitenteile 310, 320, von welchen in den Fig. 1 und 2 jeweils nur eines sichtbar ist. Die Seitenteile 310, 320 sind dabei ebenfalls über die Trägerplatte 30 miteinander verbunden. Die Trägerplatte 30 ist alternativ zu der in den Fig. 1 und 2 dargestellten Anordnung auch an einer Unterseite der Seitenteile 310, 320 und somit unterhalb der Laufschiene 2 anordenbar. In jedem Seitenteil 310, 320 ist ein Laufelement vorgesehen, wobei das Schienenfahrzeug 3 mittels der Laufelemente an der Laufschiene 2 abgestützt ist. Die Laufelemente sind für eine Bewegung des Schienenfahrzeugs 3 entlang der Laufschiene 2 zumindest teilweise angetrieben.

Die Achsmodule 31, 32 sind in einer Ausgestaltung zumindest im Wesentlichen baugleich. In anderen Ausgestaltungen unterscheiden sich die Achsmodule 31, 32 in ihrem Aufbau, wobei beispielsweise nur ein Achsmodul 31, 32 ein für eine Bewegung des Schienenfahrzeugs angetriebenes Laufelement aufweist.

Das Schienenfahrzeug 3 ist selbsttätig mittels der Laufelemente und einer an dem Schienenfahrzeug 3 vorgesehenen, in den Figuren nicht sichtbaren Antriebsvorrichtung bewegbar. Die Antriebsvorrichtung umfasst mindestens eine Antriebseinheit zum Antrieb mindestens eines Laufelements, vorzugsweise mehrere dezentral angeordnete den Laufelementen zugeordnete Antriebseinheiten. Als Antriebseinheit ist vorzugsweise ein Elektromotor vorgesehen. Eine Ansteuerung der Antriebsvorrichtung erfolgt vorzugsweise mittels einer an dem Schienenfahrzeug 3 vorgesehen, zentralen Steuereinheit. Für eine Energieversorgung der Antriebsvorrichtung und/oder der zentralen Steuereinheit sind an einer Seite der Laufschiene 2 zwei parallel verlaufende Stromführungsschienen 4 vorgesehen. An dem Schienenfahrzeug 3 sind nicht sichtbare Stromabnehmer vorgesehen, welche mit den Stromführungsschienen 4 zusammenwirken. Die Stromabnehmer sind beispielsweise wie in DE 198 37 975 A1 beschrieben gestaltet. An einer Oberseite der Laufschiene 2 ist eine Abdeckleiste 5 vorgesehen.

Das dargestellte Schienenfahrzeug 3 weist weiter zwei Notbremssysteme 6 auf. In dem dargestellten Ausführungsbeispiel sind zwei den Achsmodulen 31, 32 zugeordnete Notbremssysteme 6 vorgesehen, welche jeweils einen mechanischen Schalter 60 umfassen, wobei beide Notbremssysteme 6 mittels der mechanischen Schalter 60 aktivierbar sind. In anderen Ausgestaltungen sind beide Notbremssysteme 6 mittels eines gemeinsamen Schalters aktivierbar. In wieder anderen Ausgestaltungen ist nur ein Notbremssystem 6 vorgesehen. Die Funktion der Notbremssysteme 6 wird weiter unten im Detail erläutert.

An den zwei Enden der Trägerplatte 30 ist jeweils ein Aufprall-Schutzelement 36 vorgesehen, welches in Längsrichtung verschieblich mit der Trägerplatte 30 gekoppelt ist. Die Aufprall-Schutzelemente 36 sind plattenförmig gestaltet und vorzugsweise entgegen der Kraft geeigneter Rückstellelemente (nicht sichtbar) verstellbar. Die Aufprall-Schutzelemente 36 dienen dabei als Feder- und/oder Dämpfungsanordnung zur Reduzierung der bei einer Kollision mit einem zweiten Schienenfahrzeug 3 oder der Umgebung auftretenden Kräfte. Zudem sind vorzugsweise Sensoren vorgesehen, mittels welchen eine Verschiebung eines Aufprall-Schutzelements 36 relativ zu der Trägerplatte 30 erfassbar ist, sodass bei einer Verschiebung das Notbremssystem 6 aktivierbar ist.

Weiter weist das dargestellte Schienenfahrzeug 2 mehrere Sensorelemente 8 auf, mittels welcher Hindernisse in der Bewegungsbahn des Schienenfahrzeugs 2 detektierbar sind. Die Sensorelemente 8 sind in dem dargestellten Ausführungsbeispiel an den Aufprall-Schutzelementen 36 angeordnet.

Die Seitenteile 310, 320 umfassen jeweils Abdeckungen, wobei die Abdeckungen derart gestaltet sind, dass zwischen den Seitenteile 310, 320 und damit zwischen dem Schienenfahrzeug 3 und der Laufschiene 2 ein Spalt verbleibt, der vorzugsweise kleiner als 5 mm ist. Die Abdeckungen sind in vorteilhaften Ausgestaltungen in ihrer Position relativ zu der Laufschiene verschiebbar, so dass der Abstand zu jedem Zeitpunkt eine maximale Spaltgröße, beispielsweise 5 mm nicht überschreitet und gleichzeitig vermieden wird, dass die Abdeckungen beim Durchfahren von Kurven oder dergleichen an die Laufschiene anstoßen. Zu diesem Zweck sind in einer Ausgestaltung nicht dargestellte federbelastete Andrückelemente vorgesehen, wobei die Abdeckungen mittels der Andrückelemente abgestützt sind. Dadurch wird eine Verletzungsgefahr durch Einklemmen vermieden. Außerdem kann dadurch auf Schutzgitter oder Einhausungen des Transportsystems verzichtet werden.

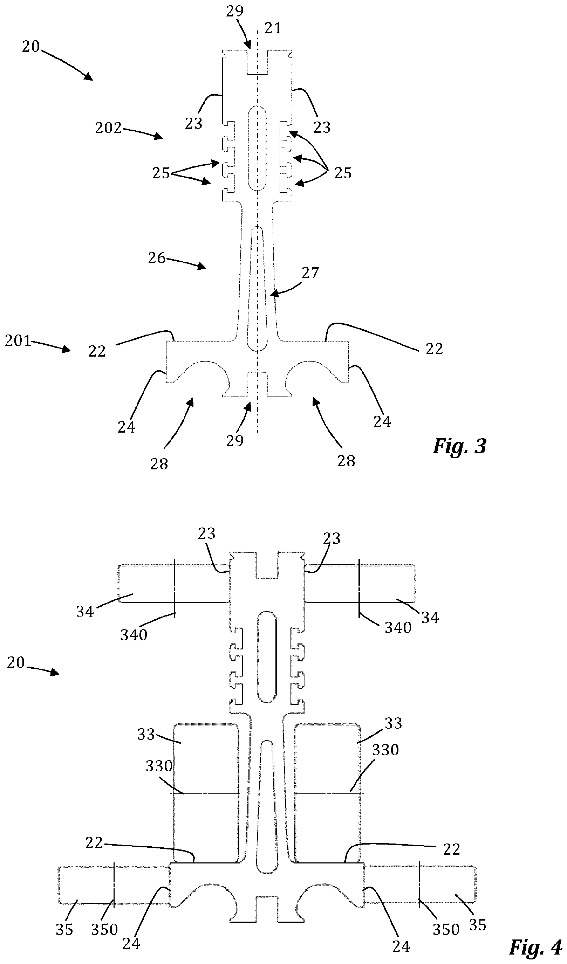

Eine Strecke der Laufschiene 2 ist an den jeweiligen Produktions-, Montage- und/oder Logistikprozess angepasst, wobei die Strecke je nach Anforderung Weichen oder Abzweigungen aufweisen kann. Die Steuereinheit weist in vorteilhaften Ausgestaltungen ein Kommunikationsmodul auf, über welches Weichen individuell ansteuerbar sind. Die Strecke ist aus mehreren in Reihe angeordneten Laufschienen-Profilelementen 20 (s. Fig. 3), kurz Profilelementen, zusammengesetzt.

Wie am besten anhand des in Fig. 3 dargestellten Querschnitts eines Laufschienen-Profilelements 20 erkennbar ist, ist das Profilelement 20 bezüglich einer Mittellinie 21 symmetrisch aufgebaut. Die Laufschiene 2, genauer das Profilelement 20 hat beidseits der Mittellinie 21 jeweils eine nach oben weisende Laufbahn 22, wobei die Laufbahnen 22 zumindest im Wesentlichen in einer Höhe angeordnet sind. Weiter sind beidseits der Mittellinie 20 jeweils eine obere vertikale Führungsbahn 23, die oberhalb der Laufbahnen 22 angeordnet ist, und eine untere vertikale Führungsbahn 24, die unterhalb der Laufbahnen 22 angeordnet ist, vorgesehen.

Das Profilelement 20 ist im Wesentlichen umgekehrt T-förmig. Die Laufbahnen 22 sind an der Oberseite eines ersten Abschnitts 201 vorgesehen, welcher in dem dargestellten Ausführungsbeispiel den Querbalken der umgekehrten T-Form an einem unteren Ende des Profilelements 20 bildet. Der erste Abschnitt 201 ragt somit beidseits der Mittellinie 21 seitlich ab. Die zwei unteren Führungsbahn 24 sind an den zwei Seitenflächen des ersten Abschnitts 201 vorgesehen.

Das Profilelement 20 weist weiter sechs T-Nuten 25 auf, in welche teilweise die in Fig. 1 und 2 dargestellten Stromführungsschienen 4 eingeclipst werden. In dem dargestellten Ausführungsbeispiel sind die T-Nuten 25 für die Stromführungsschienen 4 an einem zweiten, zu dem ersten Abschnitt 201 in vertikaler Richtung beabstandeten Abschnitt 202 des Profilelements 20 vorgesehen. Dabei sind in dem dargestellten Ausführungsbeispiel an beiden Seiten des Profilelements 20 jeweils drei T-Nuten 25 vorgesehen, wobei vorzugsweise in zwei, an einer Seite angeordnete T-Nuten 25 im Gebrauch die Stromführungsschienen 4 eingeclipst werden.

Der erste Abschnitt 201 und der zweite Abschnitt 202 sind über einen vertikalen Steg 26 verbunden, dessen Breite in Richtung auf den ersten Abschnitt 201 zunimmt.

Die zwei oberen Führungsbahnen 23 sind oberhalb der T-Nuten 25 an den zwei Seitenflächen des zweiten Abschnitts 202 vorgesehen.

Für eine Gewichtsreduzierung weist das Profilelement 20 in dem Steg 26 eine Kammer 27 auf. Weiter sind an einer ungenutzten Unterseite des ersten Abschnitts des Profilelements 20 sich in Längsrichtung erstreckende Nuten 28 vorgesehen. Die Lage und/oder Form der Kammer 27 und/oder der Nuten 28 ist dabei durch den Fachmann geeignet wählbar, um eine Gewichtsreduzierung ohne relevante Schwächung des Profilelements 20 zu erzielen.

An einer Oberseite und einer Unterseite des Profilelements 20 sind Nuten 29 vorgesehen, in welche Verbindungselemente zur Verbindung aneinander angrenzender Profilelemente 20 einsetzbar sind

Wie oben beschrieben, umfasst jedes Seitenteil 310, 320 (s. Fig. 1 und 2) ein Laufelement, wobei das Schienenfahrzeug 3 mittels der Laufelemente an den Laufbahnen 33 der Laufschiene 2 abgestützt ist. Jedes Seitenteil umfasst vorzugsweise weiter zwei Führungselemente, welche mit den Führungsbahnen 23, 24 der Laufschiene 2 zusammenwirken. Insbesondere bei Fahrzeugen mit mehreren Achsmodulen sind jedoch auch Ausgestaltungen denkbar, in welchen nicht alle Seitenteile 310, 320 Führungselemente aufweisen.

Die Laufelemente und Führungselemente sind vorzugsweise als Räder gestaltet.

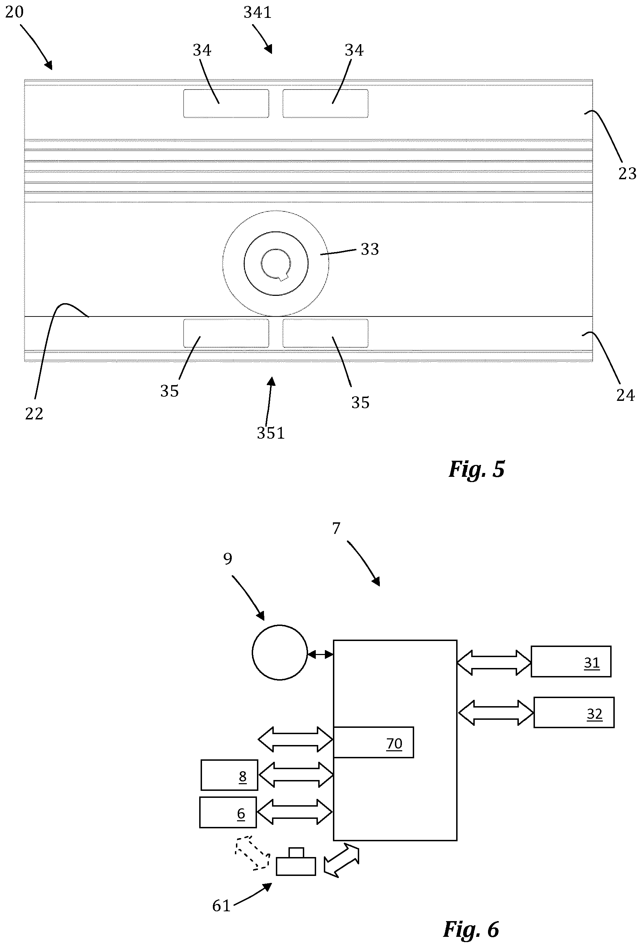

Fig. 4 und 5 zeigen schematisch das Profilelement 20 gemäß Fig. 3 in einem Querschnitt bzw. einer Seitenansicht mit schematischer Darstellung von Laufrädern 33 und Führungsrädern 34, 35 eines Achsmoduls 31.

Wie in den Fig. 4 und 5 dargestellt, sind die Laufräder 33 jeweils um eine horizontale Achse 330 drehbar gelagert, sodass das Schienenfahrzeug 3 mittels der Laufräder 33 entlang der entlang horizontalen, nach oben weisenden Laufbahnen 22 verfahrbar ist.

Die Führungsräder 34, 35 sind jeweils um vertikale Achsen 340, 350 drehbar gelagert und rollen passiv entlang der Führungsbahnen 23, 24 ab. Wie in Fig. 5 erkennbar ist, sind in dem dargestellten Ausführungsbeispiel die Führungsräder 34, 35 jeweils paarweise vorgesehen. Die zwei einer Führungsbahn 23, 24 zugeordneten Führungsräder 34, 35 bilden dabei jeweils eine Führungsrädervorrichtung 341, 351 mit zwei in Längsrichtung des Achsmoduls 31, 32 versetzt angeordneten, um vertikale Achsen drehbar gelagerten Führungsrädern 34, 35.

Wie bereits oben erwähnt, ist vorzugsweise eine Antriebsvorrichtung an dem Schienenfahrzeug vorgesehen, mittels welcher zumindest ein Laufrad 33 des Schienenfahrzeugs 3 antreibbar ist. In vorteilhaften Ausgestaltungen ist jedes Laufrad 33 des Schienenfahrzeugs 3 mittels der Antriebsvorrichtung für ein selbsttätiges Verfahren des Schienenfahrzeugs 3 entlang der Laufbahnen antreibbar.

Die Antriebsvorrichtung umfasst in vorteilhaften Ausgestaltungen mehrere Antriebseinheiten, welche jeweils in den Seitenteilen 310, 320 angeordnet sind. Die Antriebseinheiten sind beispielsweise als Elektromotoren gestaltet. Eine Ansteuerung der Antriebseinheiten, insbesondere der Elektromotoren, erfolgt dabei vorzugsweise über eine zentrale Steuereinheit 7.

Fig. 6 zeigt schematisch eine zentrale Steuereinheit 7 für ein Schienenfahrzeug 3 gemäß Fig. 1 und 2 mit zwei Achsmodulen 31, 32, wobei die Achsmodule 31, 32 mit der Steuereinheit 7 drahtlos oder drahtgebunden zum Austausch von Daten verbunden ist. In dem Ausführungsbeispiel ist ein Datenkanal pro Achsmodul 31, 32 dargestellt, es sind jedoch auch Ausgestaltungen mit mehr als einem Datenkanal pro Achsmodul 31, 32 denkbar, beispielsweise mit einem Datenkanal pro Seitenteil. Die zentrale Steuereinheit 7 dient wie beschrieben einer synchronisierten Ansteuerung der Antriebseinheiten, wobei situativ alle Laufräder mit gleicher Geschwindigkeit oder, beispielsweise für Kurvenfahrten, mit unterschiedlichen Geschwindigkeiten drehen.

An der zentralen Steuereinheit 7 ist weiter ein Kommunikationsmodul 70 vorgesehen, wobei mittels des Kommunikationsmoduls 70 die Steuereinheit 7 beispielsweise mit einer zentralen Systemsteuerung, anderen Schienenfahrzeugen, entlang einer Fahrstrecke vorgesehenen Weiche o.dgl. kommuniziert, insbesondere drahtlos, beispielsweise über Infrarot-Technik.

Eine Energieversorgung der Antriebsvorrichtung und der Steuereinheit 7 erfolgt in einem Normalbetrieb über die Stromführungsschienen 4 (s. Figur 1 und 2) an der Laufschiene 2. Für eine Überbrückung von Stromunterbrechungen und/oder für eine Energieversorgung bei Teilstrecken ohne Stromführungsschienen ist eine wiederaufladbare Energiespeichereinheit 9 vorgesehen, insbesondere ein Superkondensator. Die Energiespeichereinheit 9 ist in dem dargestellten Ausführungsbeispiel in räumlicher Nähe zu der zentralen Steuereinheit 7, beispielsweise auf einer gemeinsamen Platine, vorgesehen. Diese Anordnung ist jedoch lediglich beispielhaft. Alternativ ist es auch denkbar, mehrere dezentral angeordnete Energiespeichereinheiten 9 vorzusehen, welche beispielsweise in den Seitenteilen 310, 320 angeordnet sind.

Ein Abbremsen des Schienenfahrzeugs 3 erfolgt im Normalbetrieb ebenfalls mittels der Antriebsvorrichtung. Zudem weist jedes Achsmodul 31, 32 des dargestellten Schienenfahrzeugs 3 ein Notbremssystem 6 auf. Die Notbremssysteme 6 sind dabei derart gestaltet, dass sie bei Unterbrechung einer Energiezufuhr aktivierbar sind. Wie in den Fig. 1 und 2 dargestellt, ist in dem Ausführungsbeispiel jedem Notbremssystemen 6 ein mechanischer Schalter 60 zugeordnet, mittels welchem das Notbremssystem aktivierbar ist.

In dem dargestellten Ausführungsbeispiel ist das Notbremssystem 6 mit der zentralen Steuereinheit 7 kommuniziert. Dadurch können Informationen der Notbremssysteme 6 an der Steuereinheit 7 verarbeitet werden. Beispielsweise ist es denkbar, dass es nur an einem Achsmodul 31, 32 zu einer Unterbrechung der Energiezufuhr kommt, wobei diese Information an das zweite Achsmodul 32, 31 zur Einleitung entsprechender Maßnahmen weitergeleitet wird.

Eine Deaktivierung des Notbremssystems 6 ist in einer Ausgestaltung ausschließlich manuell mittels eines manuell betätigbaren Schaltelements 61 möglich. Das Schaltelement 61 ist in einer Ausgestaltung an einer durch eine Serviceperson zugängliche Stelle vorgesehen, beispielsweise an der Steuereinheit 7 oder an einer anderen Stelle, welche mit der Steuereinheit 7 datentechnisch verbunden ist. Die Deaktivierung erfolgt dabei in einer Ausgestaltung direkt. In vorteilhaften Ausgestaltungen erfolgt die Deaktivierung indirekt über die zentrale Steuereinheit 7. In wieder anderen Ausgestaltungen ist die zentrale Steuereinheit 7 derart gestaltet, dass sie in bestimmten Situationen eine Deaktivierung elektronisch bewirken kann, ohne manuelle Eingriffe einer Serviceperson.

Eine Aktivierung des Notbremssystems 6 ist vorzugsweise manuell mittels des Schalters 60, bei Unterbrechung der Energiezufuhr, einer Verschiebung des Aufprall-Schutzelements 36 und/oder mittels der zentralen Steuereinheit 7 möglich. Eine Aktivierung mittels der Steuereinheit 7 erfolgt beispielsweise aufgrund von Signalen, welche von einem zweiten Schienenfahrzeug oder einer anderen Vorrichtung an das Schienenfahrzeug 3 übertragen werden. Zudem ist eine Aktivierung aufgrund von Sensorsignalen der an dem Schienenfahrzeug 3 vorgesehenen Sensorelemente 8 denkbar. Dabei ist jedoch eine Notbremsung in der Regel nur einzuleiten, wenn Bremsvorgänge über die Antriebsvorrichtung nicht zweckmäßig zur Kollisionsvermeidung erscheinen.

An dem in den Fig. 1 und 2 dargestellten Schienenfahrzeug 3 ist in vorteilhaften Ausgestaltungen ein in den Figuren nicht dargestelltes Bedienfeld vorgesehen. Das Bedienfeld umfasst zumindest eine Start- und/oder Stopptaste mittels welcher das Schienenfahrzeug 3 gestartet und gestoppt werden kann. An dem Bedienfeld ist in vorteilhaften Ausgestaltungen ein Mensch-Maschine-Interface vorgesehen, mittels welchem Meldungen der zentralen Steuereinheit 7 ausgebbar und durch eine Serviceperson beispielsweise durch Tastenbetätigung quittierbar sind. Insbesondere ist die Aktivierung des Notbremssystems 6 optisch und/oder akustisch anzeigbar, wobei eine Serviceperson die notwendigen Schritte einleiten kann, um das Notbremssystem zu deaktiveren und/oder um Probleme, die zur Aktivierung des Notbremssystems geführt haben, zu beheben. Die Durchführung der Schritte können dabei durch Tastenbetätigung durch die Serviceperson quittiert werden. In vorteilhaften Ausgestaltungen erfolgt dabei die Deaktivierung des Notbremssystems 6 über das Bedienfeld. Das Mensch-Maschine-Interface umfasst in vorteilhaften Ausgestaltungen eine optische Anzeigeeinheit, wobei in einer Ausgestaltung manuelle Schaltelemente in die Anzeigeeinheit integriert sind.

Das dargestellte Notbremssystem 6 ist nicht nur bei einem in den Fig. 1 bis 4 dargestellten Schienentransportsystem 1, sondern auch bei anderen Schienentransportsystemen 1, beispielsweise einem aus EP 0 728 647 A1 bekannten Schienentransportsystem, vorteilhaft einsetzbar.

## Patentansprüche

1. Schienentransportsystem für Produktions-, Montage- und/oder Logistikprozesse umfassend eine Laufschiene (2) und ein entlang der Laufschiene (2) bewegbares Schienenfahrzeug (3), wobei die Laufschiene (2) beidseits einer Mittellinie (21) jeweils eine Laufbahn (22) und mindestens eine Führungsbahn (22, 23) aufweist, wobei die Laufbahnen (22) als horizontale, nach oben weisende, zumindest im Wesentlichen in einer Höhe angeordnete Laufbahnen (22) gestaltet sind, mindestens an einer ersten Seite der Laufschiene (2) eine obere vertikale Führungsbahn (23), die oberhalb der Laufbahnen (22) angeordnet ist, vorgesehen ist, und mindestens an einer zweiten Seite der Laufschiene (2) eine untere vertikale Führungsbahn (24), die unterhalb der Laufbahnen (22) angeordnet ist, vorgesehen ist, wobei die Laufschiene (2) mindestens ein Profilelement (20) umfasst, wobei das mindestens eine Profilelement (20) einen ersten, die Laufbahnen (22) aufweisenden Abschnitt (201), und einen dazu in vertikaler Richtung beabstandeten zweiten Abschnitt (202) hat, wobei der erste Abschnitt (201) und der zweite Abschnitt (202) über einen vertikalen Steg (26) verbunden sind, **dadurch gekennzeichnet, dass** eine Breite des Stegs (26) in Richtung auf den ersten Abschnitt (201) zunimmt.

2. Schienentransportsystem nach Anspruch 1, **dadurch gekennzeichnet, dass** an der ersten Seite und der zweiten Seite der Laufschiene (2) jeweils eine obere vertikale Führungsbahn (23), die oberhalb der Laufbahnen (22) angeordnet ist, und eine untere vertikale Führungsbahn (24), die unterhalb der Laufbahnen angeordnet ist, vorgesehen ist.

3. Schienentransportsystem nach Anspruch 1 oder 2, **dadurch gekennzeichnet, dass** die Laufschiene (2) mehrere, miteinander in Längsrichtung der Laufschiene (2) verbindbare Profilelemente (20) umfasst.

4. Schienentransportsystem nach Anspruch 1, 2 oder 3, **dadurch gekennzeichnet, dass** die mindestens eine untere Führungsbahn (24) an einer Seitenfläche des ersten Abschnitts (201) und/oder die mindestens eine obere Führungsbahn (23) an einer Seitenfläche des zweiten Abschnitts (202) vorgesehen ist.

5. Schienentransportsystem nach einem der Ansprüche 1 bis 4, **dadurch gekennzeichnet, dass** an der ersten Seite und/oder der zweiten Seite der Laufschiene (2) oberhalb der Laufbahnen (22), vorzugsweise zwischen der oberen Führungsbahn (23) und den Laufbahnen (22), mindestens eine, vorzugsweise zwei parallel verlaufende Stromführungsschienen (4) vorgesehen ist/sind, wobei vorzugsweise die mindestens eine Stromführungsschiene (4) in eine an dem zweiten Abschnitt (202) vorgesehene T-Nut (25) eingeclipst ist.

6. Schienentransportsystem nach einem der Ansprüche 1 bis 5, **dadurch gekennzeichnet, dass** das mindestens eine Profilelement (20) jeweils Kammern (27) und/oder Nuten (28) für eine Gewichtsreduzierung aufweist.

7. Schienenfahrzeug für ein Schienentransportsystem, mit einer Laufschiene nach einem der Ansprüche 1 bis 6, **dadurch gekennzeichnet, dass** das Schienenfahrzeug mindestens ein Achsmodul (31, 32) mit zwei beidseits der Laufschiene anzuordnenden Seitenteilen (310, 320) umfasst, wobei jedes Seitenteil (310, 320) ein mit einer Laufbahn (22) der Laufschiene (2) zusammenwirkendes Laufelement aufweist und wobei mindestens ein Seitenteil (310, 320), vorzugsweise beide Seitenteile (310, 320), mindestens ein passives Führungselement aufweist, mittels dem das Schienenfahrzeug (3) entlang mindestens einer vertikalen Führungsbahn (23, 24) der Laufschiene (2) geführt ist.

8. Schienenfahrzeug nach Anspruch 7, **dadurch gekennzeichnet, dass** jedes Seitenteil (310, 320) als Laufelement ein um eine horizontale Achse drehbar gelagertes Laufrad (33) aufweist, wobei das Schienenfahrzeug (3) mittels der Laufräder (33) entlang der Laufbahnen (22) verfahrbar ist.

9. Schienenfahrzeug nach Anspruch 8, **dadurch gekennzeichnet, dass** eine Antriebsvorrichtung vorgesehen ist, wobei mindestens ein Laufrad (33) des Schienenfahrzeugs (3), vorzugsweise jedes Laufrad des Schienenfahrzeugs (3), mittels der Antriebsvorrichtung für ein selbsttätiges Verfahren des Schienenfahrzeugs (3) entlang der Laufbahnen (22) antreibbar ist.

10. Schienenfahrzeug nach Anspruch 8, 9 oder 10, **dadurch gekennzeichnet, dass** als passives Führungselement eine Führungsrädervorrichtung (341, 351) mit mindestens einem um eine vertikale Achse drehbar gelagerten, im Gebrauch entlang der oberen oder der unteren Führungsbahn (23, 24) abrollenden Führungsrad vorgesehen ist, wobei vorzugsweise jede Führungsrädervorrichtung (341, 351) zwei in Längsrichtung des Achsmoduls (31, 32) versetzt angeordnete, um vertikale Achsen drehbar gelagerte Führungsräder (34, 35) aufweist.

11. Schienenfahrzeug nach einem der Ansprüche 8 bis 11, **dadurch gekennzeichnet, dass** der Schienenfahrzeug (3) zwei in Längsrichtung beabstandete Achsmodule (31, 32) aufweist, wobei die Achsmodule (31, 32) mittels einer oberhalb oder unterhalb der Laufschiene anordenbaren Trägerplatte (30) verbunden sind.

## Claims

1. Rail transportation system for production, assembly, and/or logistics processes, comprising a running rail (2) and a rail vehicle (3) that is movable along the running rail (2), wherein the running rail (2) on either side of a centre line (21) in each case has one running track (22) and at least one guide track (22, 23), wherein the running tracks (22) are designed as horizontal and upwardly pointing running tracks (22) that are disposed at least substantially at one height, an upper vertical guide track (23) which is disposed above the running tracks (22) is provided at least on a first side of the running rail (2), and a lower vertical guide track (24) which is disposed below the running tracks (22) is provided at least on a second side of the running rail (2), wherein the running rail (2) comprises at least one profiled element (20), wherein the at least one profiled element (20) has a first portion (201) that has the running tracks (22), and a second portion (202) that in the vertical direction is spaced apart from said first portion (201), wherein the first portion (201) and the second portion (202) are connected by way of a vertical web (26),
**characterized in that**
a width of the web (26) increases in the direction towards the first portion (201).

2. Rail transportation system according to Claim 1, **characterized in that** in each case one upper vertical guide track (23) which is disposed above the running tracks (22), and a lower vertical guide track (24) which is disposed below the running tracks, are provided on the first side and on the second side of the running rail (2).

3. Rail transportation system according to Claim 1 or 2, **characterized in that** the running rail (2) comprises a plurality of profiled elements (20) that are interconnectable in the longitudinal direction of the running rail (2).

4. Rail transportation system according to Claim 1, 2 or 3, **characterized in that** the at least one lower guide track (24) is provided on a lateral face of the first portion (201), and/or the at least one upper guide track (23) is provided on a lateral face of the second portion (202).

5. Rail transportation system according to one of Claims 1 to 4, **characterized in that** at least one current conductor rail (4), preferably two current conductor rails (4) running in parallel, is/are provided on the first side and/or the second side of the running rail (2) so as to be above the running tracks (22), preferably between the upper guide track (23) and the running tracks (22), wherein the at least one current conductor rail (4) is preferably clip-fitted into a T-shaped groove (25) that is provided on the second portion (202).

6. Rail transportation system according to one of Claims 1 to 5, **characterized in that** the at least one profiled element (20) in each case has chambers (27) and/or grooves (28) for weight reduction.

7. Rail vehicle for a rail transportation system having a running rail according to one of Claims 1 to 6, **characterized in that** the rail vehicle comprises at least one axle module (31, 32) having two lateral parts (310, 320) to be disposed on either side of the running rail, wherein each lateral part (310, 320) has a running element that interacts with a running track (22) of the running rail (2), and wherein at least one lateral part (310, 320), preferably both lateral parts (310, 320), has/have at least one passive guide element by means of which the rail vehicle (3) is guided along at least one vertical guide track (23, 24) of the running rail (2).

8. Rail vehicle according to Claim 7, **characterized in that** each lateral part (310, 320) as a running element has a running wheel (33) that is mounted so as to be rotatable about a horizontal axle, wherein the rail vehicle (3) is displaceable along the running tracks (22) by means of the running wheels (33).

9. Rail vehicle according to Claim 8, **characterized in that** a drive device is provided, wherein at least one running wheel (33) of the rail vehicle (3), preferably each running wheel of the rail vehicle (3), for self-acting displacement of the rail vehicle (3) along the running tracks (22) is driveable by means of the drive device.

10. Rail vehicle according to Claim 8, 9, or 10, **characterized in that** a guide wheel device (341, 351) having at least one guide wheel that is mounted so as to be rotatable about a vertical axle and in use rolls along the upper or the lower guide track (23, 24) is provided as the passive guide element, wherein preferably each guide wheel device (341, 351) has two guide wheels (34, 35) that are disposed so as to be offset in the longitudinal direction of the axle module (31, 32) and are mounted so as to be rotatable about vertical axles.

11. Rail vehicle according to one of Claims 8 to 11, **characterized in that** the rail vehicle (3) has two axle modules (31, 32) that are spaced apart in the longitudinal direction, wherein the axle modules (31, 32) are connected by means of a mounting plate (30) that is disposable above or below the running rail.

## Revendications

1. Système de transport à rails destiné à des processus de production, d'assemblage et/ou de logistique, comprenant un rail de roulement (2) et un véhicule sur rails (3) pouvant être déplacé le long du rail de roulement (2), le rail de roulement (2) présentant des deux côtés d'une ligne médiane (21) respectivement une voie de roulement (22) et au moins une voie de guidage (22, 23), dans lequel les voies de roulement (22) sont configurées sous la forme de voies de roulement horizontales (22) orientées vers le haut, disposées au moins substantiellement à une hauteur, une voie de guidage verticale supérieure (23), qui est disposée au-dessus des voies de roulement (22), est prévue au moins sur un premier côté du rail de roulement (2), et une voie de guidage verticale inférieure (24), qui est disposée au-dessous des voies de roulement (22), est prévue au moins sur un deuxième côté du rail de roulement (2), le rail de roulement (2) comprenant au moins un élément profilé (20), ledit au moins un élément profilé (20) comportant une première partie (201) présentant les voies de roulement (22) et une deuxième partie (202) espacée par rapport à celle-ci dans la direction verticale, la première partie (201) et la deuxième partie (202) étant reliées par une entretoise verticale (26), **caractérisé en ce qu'**une largeur de l'entretoise (26) augmente en direction de la première partie (201).

2. Système de transport à rails selon la revendication 1, **caractérisé en ce que** sur le premier côté et le deuxième côté du rail de roulement (2), respectivement une voie de guidage verticale supérieure (23), qui est disposée au-dessus des voies de roulement (22), et une voie de guidage verticale inférieure (24), qui est disposée au-dessous des voies de roulement, sont prévues.

3. Système de transport à rails selon la revendication 1 ou 2, **caractérisé en ce que** le rail de roulement (2) comprend plusieurs éléments profilés (20) pouvant être reliés ensemble dans la direction longitudinale du rail de roulement (2).

4. Système de transport à rails selon la revendication 1, 2 ou 3, **caractérisé en ce que** ladite au moins une voie de guidage inférieure (24) est prévue sur une surface latérale de la première partie (201) et/ou ladite au moins une voie de guidage supérieure (23) est prévue sur une surface latérale de la deuxième partie (202).

5. Système de transport à rails selon l'une quelconque des revendications 1 à 4, **caractérisé en ce que** sur le premier côté et/ou le deuxième côté du rail de roulement (2), au-dessus des voies de roulement (22), de préférence entre la voie de guidage supérieure (23) et les voies de roulement (22), au moins un, de préférence deux, rail(s) conducteur(s) de courant (4) s'étendant en parallèle est/sont prévu(s), ledit au moins un rail conducteur de courant (4) étant de préférence clipsé dans une rainure en T (25) prévue dans la deuxième partie (202).

6. Système de transport à rails selon l'une quelconque des revendications 1 à 5, **caractérisé en ce que** ledit au moins un élément profilé (20) présente respectivement des compartiments (27) et/ou des rainures (28) pour une réduction du poids.

7. Véhicule sur rails pour un système de transport à rails comprenant un rail de roulement selon l'une quelconque des revendications 1 à 6, **caractérisé en ce que** le véhicule sur rails comprend au moins un module d'axe (31, 32) doté de deux pièces latérales (310, 320) à disposer des deux côtés du rail de roulement, chaque pièce latérale (310, 320) présentant un élément de roulement coopérant avec une voie de roulement (22) du rail de roulement (2), et au moins une pièce latérale (310, 320), de préférence les deux pièces latérales (310, 320), présente(nt) au moins un élément de guidage passif au moyen duquel le véhicule sur rails (3) est guidé le long d'au moins une voie de guidage verticale (23, 24) du rail de roulement (2).

8. Véhicule sur rails selon la revendication 7, **caractérisé en ce que** chaque pièce latérale (310, 320) présente en tant qu'élément de roulement une roue de roulement (33) montée en rotation autour d'un axe horizontal, le véhicule sur rails (3) pouvant être déplacé le long des voies de roulement (22) au moyen des roues de roulement (33).

9. Véhicule sur rails selon la revendication 8, **caractérisé en ce qu'**un dispositif d'entraînement est prévu, au moins une roue de roulement (33) du véhicule sur rails (3), de préférence chaque roue de roulement du véhicule sur rails (3), pouvant être entraînée au moyen du dispositif d'entraînement pour un déplacement autonome du véhicule sur rails (3) le long des voies de roulement (22) .

10. Véhicule sur rails selon la revendication 8, 9 ou 10, **caractérisé en ce qu'**en tant qu'élément de guidage passif, un dispositif à roue de guidage (341, 351), doté d'au moins une roue de guidage montée en rotation autour d'un axe vertical, roulant le long de la voie de guidage supérieure ou inférieure (23, 24) en cours d'utilisation, est prévu, dans lequel chaque dispositif à roue de guidage (341, 351) présente de préférence deux roues de guidage (34, 35) disposées de manière décalée dans la direction longitudinale du module d'axe (31, 32) et montées en rotation autour d'axes verticaux.

11. Véhicule sur rails selon l'une quelconque des revendications 8 à 11, **caractérisé en ce que** le véhicule sur rails (3) présente deux modules d'axe (31, 32) espacés dans la direction longitudinale, les modules d'axe (31, 32) étant reliés au moyen d'un plateau de support (30) pouvant être disposé au-dessus ou au-dessous du rail de roulement.
